Europäisches Patentamt

European Patent Office

Office européen des brevets

(11) Publication number: **0 514 623 A2**

## (12) EUROPEAN PATENT APPLICATION

(21) Application number: **92101588.9**

(22) Date of filing: **31.01.92**

(51) Int. Cl.5: **B29C 67/20,** //B29K79:00

(30) Priority: **20.05.91 US 702849**

(43) Date of publication of application:
**25.11.92 Bulletin 92/48**

(84) Designated Contracting States:
**AT BE CH DE DK ES FR GB IT LI NL SE**

(71) Applicant: **Irbit Research + Consulting AG**
**Rue Saint Pierre 24**
**CH-1701 Fribourg(CH)**

(72) Inventor: **The inventor has agreed to waive**
**his entitlement to designation**

(74) Representative: **Müller, Enno et al**
**Rieder & Partner Corneliusstrasse 45**
**W-5600 Wuppertal 11(DE)**

(54) Method of making honeycomb uniformly filled with foamed in place polyimide foam.

(57) A method of filling a honeycomb or similar multi-cell structure with a very uniform polyimide foam. A very uniform layer of finely divided polyimide foam precursor powder is formed on a mold-release coated surface within cells of a honeycomb structure on the surface. The uniform layer within the cells may be formed by forming a uniform precursor powder layer on the surface and pressing the honeycomb down through the layer. Or, precursor powder may be sifted uniformly into the cells of a honeycomb structure resting on the surface while moving the sifter across the honeycomb structure. A sheet having a mold-release surface is placed over the honeycomb. The assembly is then heated, such as in a heated platen press, to the foaming and condensation temperature of the precursor. Each cell is filled with a very uniform, controlled density, polyimide foam. The assembly may be further heated to the full cure temperature of the polyimide material.

FIGURE 1

BACKGROUND OF THE INVENTION

This invention relates in general to the production of polyimide foam structures and, more specifically, to methods of filling honeycomb or similar structures with very uniform controlled density polyimide foam.

Polyimide resins, as coatings, adhesives, foams and the like have come into widespread use due to their chemical inertness, strength, high temperature registance and flame resistance. Polyimide foam in the form of sheets and panels are often used as thermal insulation in high temperature environments. Typical polyimide foams include those described in U. S. Patents 4,425,441 (Gagliani et al), 4,426,463 (Gagliani et al), 4,518,717 (Long et al), 4,562,112 (Lee et al), 4,621,015 (Long et al) and 4,647,597 (Shulman et al).

Sheets and panels of foam are generally made by causing a layer off liquid or powder precursor on a flat surface to foam without restriction, then slicing the foam at a desired thickness parallel to the surface, to remove the rind that forms on the free surface. This generally produces a foam sheet of optimum uniformity and low density. These sheets may then be adhesively bonded to face sheets to form walls, insulating panels or the like. While useful in many applications, these panels may not have sufficient strength and stiffness for some applications.

The liquid or powder polyimide foam precursor may also be heated to the foaming and curing temperatures in a closed mold coated with a mold release to form a sheet or other desired shaped foam product as described, for example, by Gagliani et al in U.S. Patent 4,425,441. While a variety of shapes may be formed, the restricted foam expansion often produces foams of uneven density and higher overall density than is generally desired. Foaming may also take place between face sheets so that the foam bonds to the face sheets, forming a composite panel. Again, the foam tends to be uneven in density and higher in density than is preferred for insulation and other applications. Also the final structure may not have sufficient strength and stiffness for some purposes.

For many applications, such as structural walls, insulating panels and the like it is desirable to fill the cells of a honeycomb or similar multi-cell structure with a polyimide foam. Honeycomb structures have a plurality of calls across a sheet, the cell walls being relatively thin and generally lying substantially perpendicular to the sheet surface. The cells may be hexagonal, square, rectangular, curved, etc. in cross section. Polyimide foam precursor powder has, in the past, simply been poured into such cells and the assembly heated to the foaming temperature of the precursor. Upon completion of foaming, and generally after full cure of the resin, excess material extending above the honeycomb sheet is cut or sanded away. Removal of the excess foam often damages the thin and relatively fragile cell walls. Also, the amount and distribution of precursor powder poured into the cells varies, so that the foam tends to be inconsistent in density and cell size.

Other known methods of filling honeycomb cells with polyimide foam include dipping the honeycomb in a liquid polyimide foam precursor or spraying the liquid precursor into the cells. The assembly heated, with or without pre-drying of the liquid precursor, to the foaming temperature. Problems occur where complex contours or thicknesses are required or where density of the foam must be controlled with precision. Excess foam extending above the honeycomb must be removed by cutting or sanding, with risk of damage to the honeycomb cell walls.

As described by Ferro et al in U.S. Patent 4,898,763, fully cured polyimide foam has been subjected to steam at high temperatures resulting in hydrolysis of the foam, rendering it inflexible and stiff. The foam can then be pierced by pressing it into a mold such as a honeycomb core. This foam, however, has less desirable physical properties as a result of this complex, expensive and degrading process and is generally not bonded to the honeycomb structure.

Thus, there is a continuing need for methods of preparing honeycomb or similar structures having cells uniformly filled with very uniform, low density polyimide foam well bonded to the structure.

SUMMARY OF THE INVENTION

It is, therefore, an object of this invention to provide a method for filling honeycomb cells by foaming in place that produces highly foam of very uniform low density and uniform foam structure including uniform foam cell sizes. Another object is to provide an method of filling honeycomb calls by foaming in place that produces foam well bonded to the cell walls.

The above noted objects, and others, are accomplished in accordance with this invention by a method that basically includes providing a honeycomb or the like sheet, placing the honeycomb sheet on a surface having a mold-release coating, forming a very uniform layer of polyimide foam precursor powder in each cell, placing a sheet having a mold release coating over the honeycomb and heating the assembly to at least the foaming and resin condensation temperature. The assembly may be further heated to an advanced state of cure if desired.

Preferred methods of forming the very uniform layer of precursor powder in the honeycomb cells include screeding a uniform layer on the mold release coated surface, then pressing the honeycomb sheet down through the powder layer and carefully and uniformly sifting a layer of precursor powder into the honeycomb cells with the honeycomb sheet on the mold release surface while vibrating or oscillating the honeycomb sheet and surface to assure uniform distribution of powder across each cell.

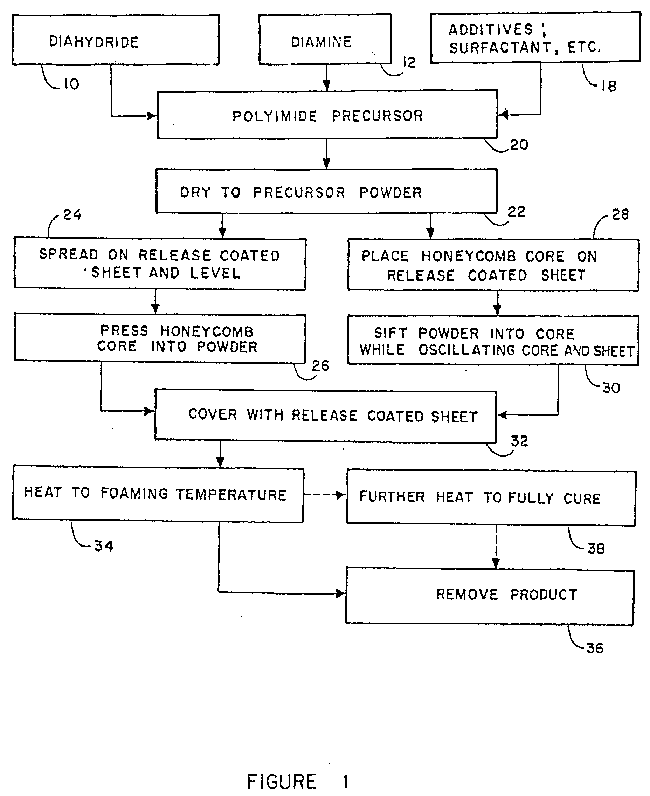

## BRIEF DESCRIPTION OF THE DRAWING

Details of the invention, and of preferred embodiments thereof, will be further understood upon reference to the drawing, wherein the Figure shows a schematic block diagram illustrating preferred embodiments of the method of this invention.

## DETAILED DESCRIPTION OF PREFERRED EMBODIMENTS

Initially, a suitable dianhydride is selected as indicated in Block 10. Any suitable dianhydride may be used. Best results are generally obtained with 3,3',4,4'-benzophenone tetracarboxylic acid dianhydride (BTDA).

A suitable diamine is selected, as indicated in Block 12. Any suitable diamine may be used. Typical diamines include aromatic diamines such as meta-phenylene diamine, para-phenylene diamine, 4,4'-diaminodiphenyl ether, 4,4'-diaminodiphenyi sulfone, 3,3'-diaminodiphenyl sulfone, 4,4'-diaminodiphenyl sulfide, 4,4'-diamino diaminodiphenyl methane, 3,3'-diaminodiphenyl methane and mixtures thereof. If desired aliphatic diamines may be used in combination with these aromatic diamines. Typical aliphatic diamines include 1,3-diamino propane, 1,4-diamino butane, 1,6-diamino hexane, 1,8-diamino octane, 1,12-diamino dodecane and mixtures thereof. Best results are obtained with meta- or para-phenylene diamine, or 4,4' diaminodiphenyl methane.

Any suitable additives, such as surfactants fillers, reinforcements, etc., may be added to the reactants as desired as indicated in Block 18. Typical surfactants include FC430 from 3M, Zonyl FSC from dupont, 190 from Dow Corning and L550 from Union Carbide. Other additives include ultraviolet absorbers, filler such as talc or glass powder, reinforcements such as chopped glass or Aramid fibers, etc. For best results, I find that the use of from about 0.5 to 2 wt% of a surfactant such as Dow Corning DC193 surfactant gives best results and most uniform foam cell size.

The result is a liquid polyimide foam precursor as indicated in Block 20. The liquid is dried to a uniform, finely divided powder by any suitable method, such as spray drying, vacuum drying or the like as shown in Block 22.

Any honeycomb or similar structure may be filled with foam by the method of this invention. Typically, a honeycomb sheet has a plurality of hexagonal, square, rectangular, curved or otherwise shaped cells bounded by thin walls of metal, plastic, fiber reinforced resin, etc. The cells are ordinarily perpendicular to the surface of the sheet, although they may be angled somewhat to that surface. Other multi-cell sheets or panels having the characteristics of multiple cells open to at least one surface are, for the purposes of this application, included within the term "honeycomb".

A carefully selected, thin, very uniform both in quantity and in thickness, layer of the foamable polyimide precursor is formed in each cell of a honeycomb sheet. Two preferred methods of obtaining these layers are illustrated in the drawing.

In the first technique, as shown in Block 24, a very uniform layer of precursor powder is spread across a surface having a mold release coating. Typically, the mold release may be a sheet of glass fiber cloth with a Teflon fluorocarbon coating. The uniform layer may be formed in any suitable manner. Excellent results are obtained by simply screeding the powder to produce a uniform layer. The layer may have any suitable thickness. For lowest density foam, the layer will be thin, containing a pre-determined sufficient amount of powder to produce a foam that will either fully or partially fill the honeycomb cells, as desired. As is apparent, the layer must be precise in quantity and uniform in thickness so that each cell is fully or partially filled, without surface irregularities. For higher density foam the powder layer may have greater thickness. Precision in quantity and layer level is still important to assure uniform density and cell characteristics across the honeycomb sheet.

Next, as indicated in Block 26, a honeycomb sheet is carefully pressed down through the powder layer to the supporting surface.

A second method of obtaining a very uniform precursor powder level in each honeycomb cell is shown in Blocks 28 and 30. A honeycomb sheet is placed on a mold release coated sheet as indicated in Block 28, then the powder is carefully sifted into the cells while moving the sifting means back and forth across the honeycomb and or moving the honeycomb across below the sifter..

After the uniform precursor powder layer is formed in the honeycomb cells by either of these preferred techniques, a mold release coated sheet is placed over the honeycomb as indicated in Block 32 and the assembly is heated to the foaming and condensation temperature of the polyimide precursor as indicated in Block 34. Any suitable heating method may be used, such as a thermal oven, microwave heating, etc. Where high density foam is to be produced by using excess powder, a heated platen press is preferred wherein the cover sheet will be held firmly in place against the pressure of the foaming resin.

The foam filled honeycomb product may then be removed from the hating apparatus and the cover and support sheets removed, as indicated in block 36. The product is then ready for use or any desired further processing, such as the application of face sheets or the like.

If desired, the polyimide foam can be fully cured by heating to the cure temperature prior to removal, as indicated in Block 38. Also, if desired, face sheets could be used in place of the mold release coated sheets described above. Then, the face sheets would be bonded to the honeycomb by the expanding foam, forming a unitary product of well bonded honeycomb, foam and face sheets.

Details of preferred embodiments of the method of this invention are provided in the following Examples. All parts and percentages are by weight unless otherwise indicated.

EXAMPLE I

A liquid polyimide foam precursor is prepared as described by Lavin et al in U.S. Patent 3,554,939. This precursor is molecular dispersion of the diethyl ester of benzophenone tetracarboxylic dianhydride and 4,4' diamino diphenyl methane diamine. About 1 wt%, based on the dry weight of the ingredients, of Dow Corning DC193 surfactant is added to the reactants. The liquid is then dried to a uniform, finely divided powder by vacuum drying in a rotary evaporator system. The powder is spread on a Teflon fluorocarbon coated glass fiber sheet using a metal screed to produce a very uniform layer about 3 mm thick. A honeycomb core sheet made from Nomex reinforced phenolic resin from Hexcel Corporation, having a thickness of about 19 mm and a cell diameter of about 5 mm is carefully vertically pressed into and through the powder layer. A sheet of Teflon fluorocarbon coated glass fiber fabric is placed over the honeycomb and the assembly is placed in a heated plated press having the platens at a temperature of about 140°C. The platens snugly engage the cover sheet and support so as to prevent escape of foam. After about 6 minutes the assembly is removed from the press. The cells are found to be filled with a very uniform foam, uniform in density (less than about 2 pounds per cubic foot) and cell size. This cure is sufficient to complete foaming and the resin condensation reaction. The foam is satisfactory for many uses at this point and is resistant to hydrolysis. In order to fully cure the resin, the assembly is further heated in the platen press for about 20 minutes at a **temperature of about 250°C.**

EXAMPLE II

The process of Example I is repeated, except that sheets of aluminum are substituted for the release coated glass fabric sheets. The final product is found to have these face sheets well bonded to the core, resulting in an assembly suitable for use as a structural panel.

EXAMPLE III

A polyimide precursor powder is prepared as described in Example I. The powder is placed in a conventional sieve-like powder box. A sheet of Type HRH 10 1/8 30 honeycomb from the Hexcel Corp. having cell diameter of about 1/8 inch is placed on a Teflon fluorocarbon coated glass fiber sheet. The powder is uniformly sieved into the honeycomb by moving the powder box across the honeycomb and/or moving the honeycomb assembly across below the powder box. Despite the very narrow cells, a very uniform quantity of powder having a very uniform thickness is placed in each cell. A sheet of Teflon fluorocarbon coated glass fiber fabric is placed over the honeycomb. The assembly is placed in a platen press and heated for about 7 minutes at about 250°C then for about 20 minutes at about 200°C to foam and fully cure the powder. A highly uniform foam well bonded to the honeycomb cell walls results.

EXAMPLE IV

The experiment of Example III is repeated, except that the sheets of glass fiber fabric are not coated with Teflon fluorocarbon mold release agent. The final product is found to have the fabric face sheets well bonded to the foam, resulting in a unitary structure.

EXAMPLE V

A polyimide foam precursor powder is prepared as described in Example I of U.S. Patent 4,980,389. A thin layer of the powder is formed on an aluminum sheet with a conventional screed. An aluminum honeycomb sheet from the Hexcel Corp. is carefully vertically pushed through the powder layer. The assembly is placed in a thermal oven and heated to about 140°C for about 18 minutes, then to about 260°C for about 20 minutes and finally heated to about 280°C for an additional 15 minutes. The foam in each cell is highly uniform in density and cell size and essentially uniformly fills the cells across the honeycomb. The foam is well bonded to the aluminum support sheet.

The experiment or Example V is repeated, except that a honeycomb formed from polyimide impregnated glass fiber sheets, available from the Hexcel Corp. is used, a polyimide impregnated glass fiber sheet is used for the support and a second such sheet is placed over the honeycomb and covered with a steel sheet. The polyimide precursor powder layer is formed to a slightly greater thickness than in Example V. The assembly is placed in a thermal oven and heated as described in Example V. A uniform, low density, foam fills the cells and is well bonded to both face sheets.

While certain specific materials, proportions and arrangements were detailed in the above description of preferred embodiments, those may be varied, where suitable, with similar results. For example, The parts formed by this method may be further treated, such as by laminating or joining together of the parts, the additions of facings or the like of metal, plastics, fiber reinforced sheets, etc., or the incorporation of various materials such as reinforcements into the part in the mold prior to foaming of the polyimide.

Other applications, variations and ramifications of this invention will occur to those skilled in the art upon reference to this disclosure. Those are intended to be included within the scope of this invention as defined in the appended claims.

**Claims**

1. The method of making polyimide foam filled multi-cell structures which comprises the steps of:

    providing a finely divided, powdered polyimide foam precursor;

    placing a thin walled panel structure having a plurality of substantially parallel cells open to one surface of the panel on a support sheet;

    forming a very uniform layer of said powdered polyimide foam precursor across said surface within said cells;

    heating the resulting assembly to at least the foaming and condensation temperature of said polyimide foam precursor;

    whereby polyimide foam having very uniform cell size and density fills said cells to a substantially uniform depth.

2. The method according to claim 1 wherein said very uniform layer of said powdered polyimide foam precursor within said cells is formed by screeding a layer of very uniform thickness powder across said surface, then vertically pressing said structure down into and through said powder layer.

3. The method according to claim 1 wherein said very uniform layer of said powdered polyimide foam precursor is formed by sifting powder into said cells while said structure is on said surface while moving the sifting means and said surface relative to each other in a direction substantially parallel to said surface.

4. The method according to claim 1 wherein said structure is a honeycomb panel having a plurality of cells in a hexagonal, square, rectangular or curved pattern, with said cells oriented substantially perpendicular to the panel surface.

5. The method according to claim 4 wherein the walls of said honeycomb cells are formed from a material selected from the group consisting of high temperature resistant plastics, metals and fiber reinforced plastics.

6. The method according to claim 1 including the further step of heating said assembly to the curing temperature of said polyimide for a period sufficient to fully cure said polyimide.

7. The method according to claim 1 wherein the quantity of powder in said layer is selected to be sufficient to substantially uniformly fill said cells without extending above the upper surface of said panel.

8. The method according to claim 1 further including the step of placing a sheet material over said assembly prior to heating and holding it in place to prevent foam from extending above said panel.

9. The method according to claim 8 wherein said powder layer has sufficient thickness to more than fill said cells, whereby said sheet material preventing foam from extending above said cells results in a higher density and very uniform foam in said cells.

10. The method according to claim 1 wherein at least one of said surface and said sheet have a mold release coating preventing bonding to said foam.

11. The method according to claim 1 wherein at least one of said surface and said sheet have surface characteristics permitting bonding to said foam, whereby a well bonded face sheet is produced on said structure.

12. The method of making polyimide foam filled multi-cell structures which comprises the steps of:

    providing a finely divided, powdered polyimide foam precursor;

    placing a honeycomb panel having a plurality of substantially parallel cells substantially perpendicular to one surface of the panel on a support sheet;

    forming a very uniform layer of said powdered polyimide foam precursor across said support sheet;

    pressing said honeycomb panel vertically downwardly into and through said powder layer;

    heating the resulting assembly to at least the foaming and condensation temperature of said polyimide foam precursor;

    whereby polyimide foam having very uniform cell size and density fills said cells to a substantially uniform depth.

13. The method according to claim 12 wherein said very uniform precursor layer is formed by screeding a pile of powder on said sheet.

14. The method according to claim 12 wherein said structure is a honeycomb panel having a plurality of cells in a hexagonal, square, rectangular or curved pattern, with said cells oriented substantially perpendicular to the panel surface.

15. The method according to claim 14 wherein the walls of said honeycomb cells are formed from a material selected from the group consisting of high temperature resistant plastics, metals and fiber reinforced plastics.

16. The method according to claim 11 including the further step of heating said assembly to the curing temperature of said polyimide for a period sufficient to fully cure said polyimide.

17. The method according to claim 11 wherein the quantity of powder in said layer is selected to be sufficient to substantially uniformly fill said cells without extending above the upper surface of said panel.

18. The method according to claim 11 further including the step of placing a sheet material over said assembly prior to heating and holding it in place to prevent foam from extending above said panel.

19. The method according to claim 18 wherein said powder layer has sufficient thickness to more than fill said cells, whereby said sheet material preventing foam from extending above said cells results in a higher density and very uniform foam in said cells.

20. The method according to claim 11 wherein at least one of said surface and said sheet have a mold release coating preventing bonding to said foam.

21. The method according to claim 11 wherein at least one of said surface and said sheet have surface characteristics permitting bonding to said foam, whereby a well bonded face sheet is produced on said structure.

22. The method of making polyimide foam filled multi-cell structures which comprises the steps of:

    providing a finely divided, powdered polyimide foam precursor;

    placing a thin walled honeycomb panel having a plurality of substantially parallel cells substantially perpendicular to at least one surface of the panel on a support sheet;

    sifting said polyimide precursor powder into said cells with said structure on said support sheet while moving the sifting means and said surface relative to each other in a direction substantially parallel to said surface;

    heating the resulting assembly to at least the foaming and condensation temperature of said polyimide foam precursor;

    whereby polyimide foam having very uniform cell size and density substantially at least partially fills said cells to a substantially uniform depth.

23. The method according to claim 22 wherein the walls of said honeycomb cells are formed from a material selected from the group consisting of high temperature resistant plastics, metals and fiber reinforced plastics.

24. The method according to claim 22 including the further step of heating said assembly to the curing temperature of said polyimide for a period sufficient to fully cure said polyimide.

25. The method according to claim 22 wherein the quantity of powder in said layer is selected to be sufficient to substantially uniformly fill said cells without extending above the upper surface of said panel.

26. The method according to claim 22 further including the step of placing a sheet material over said assembly prior to heating and holding it in place to prevent foam from extending above said panel.

27. The method according to claim 26 wherein said powder layer has sufficient thickness to more than fill said cells, whereby said sheet material preventing foam from extending above said calls results in a higher density and very uniform foam in said cells.

28. The method according to claim 22 wherein at least one of said surface and said sheet have a mold release coating preventing bonding to said foam.

29. The method according to claim 22 wherein at least one of said surface and said sheet have surface characteristics permitting bonding to said foam, whereby a well bonded face sheet is produced on said structure.

```
DIAHYDRIDE          DIAMINE          ADDITIVES ;
                                     SURFACTANT, ETC.
      10              12                    18

              POLYIMIDE  PRECURSOR
                                20

              DRY TO PRECURSOR POWDER
   24                            22            28

SPREAD ON RELEASE COATED      PLACE HONEYCOMB CORE ON
  SHEET AND LEVEL               RELEASE COATED SHEET

PRESS HONEYCOMB               SIFT POWDER INTO CORE
CORE INTO POWDER              WHILE OSCILLATING CORE AND SHEET
                    26                             30

          COVER WITH RELEASE COATED SHEET
                                    32

HEAT TO FOAMING TEMPERATURE  ---->  FURTHER HEAT TO FULLY CURE
         34                                          38

                              REMOVE PRODUCT
                                          36
```

FIGURE  1

8